# EUROPÄISCHE PATENTSCHRIFT

(11) **EP 4 176 271 B1**
(45) Veröffentlichungstag und Bekanntmachung des Hinweises auf die Patenterteilung: **17.09.2025**
(21) Anmeldenummer: 21736307.6
(22) Anmeldetag: 25.06.2021
(51) Int. Cl.: G01P 3/488, G01P 3/487, G01P 13/04

(54) **OMNIDIREKTIONALER DREHZAHL- UND RICHTUNGSSENSOR**
OMNIDIRECTIONAL ROTATIONAL SPEED AND ROTATIONAL DIRECTION SENSOR
CAPTEUR DE VITESSE DE ROTATION ET DE SENS DE ROTATION OMNIDIRECTIONNEL

(30) Priorität: 06.07.2020 DE 102020117752
(43) Veröffentlichungstag der Anmeldung: 10.05.2023
(73) Patentinhaber: KNORR-BREMSE Systeme für Nutzfahrzeuge GmbH, 80809 München (DE)
(72) Erfinder: HUBER, Christian, 80937 München (DE); HAUFF, Michael, 81379 München (DE)
(86) Internationale Anmeldenummer: PCT/EP2021/067537
(87) Internationale Veröffentlichungsnummer: WO 2022/008265

(56) Entgegenhaltungen:
- US-A1- 2012 249 133
- US-A1- 2016 356 628
- US-A1- 2017 322 233

## Beschreibung

Die vorliegende Erfindung betrifft einen omnidirektionalen Drehzahl- und Richtungssensor, insbesondere für die Anwendung in Nutzfahrzeugen, beispielsweise Lastkraftwagen.

Insbesondere für das autonome Fahren werden Drehzahlsensoren benötigt, welche die Drehzahlen und Drehrichtungen von bestimmten Teilen, beispielsweise Wellen, Zahnrädern oder einzelnen Fahrzeugrädern in einem Nutzfahrzeug bestimmen. Hierbei ist es insbesondere wichtig, dass sowohl die Drehzahl (also die Drehgeschwindigkeit) als auch die Drehrichtung gemessen werden.

Im Stand der Technik sind hierfür sogenannte passive Sensoren bekannt, welche ortsfest in der Nähe eines rotierenden Objekts, wie beispielsweise einer Welle oder eines Zahnrads, angebracht sind. Die radiale Orientierung des Sensors ist bei passiven Sensoren technologiebedingt nicht von Bedeutung

Bei Personenkraftwagen gibt es bereits aktive Sensoren, bei welchen die radiale Orientierung des Sensors wichtig ist. Hier ist der Sensor in der Position fixiert bzw. fest angeschraubt, so dass von einer Welle oder einem rotierenden Teil immer die exakte Drehrichtung und Drehgeschwindigkeit bestimmt werden können.

Bei Nutzfahrzeugen wird jedoch eine axiale Verschiebbarkeit solcher aktiver Sensoren benötigt, da es entsprechende Anforderungen gibt. Ein Sensor muss also beweglich sein und egal, welche Position er relativ zum rotierenden Objekt einnimmt, immer dasselbe Messergebnis liefern.

Im Stand der Technik bekannt ist beispielsweise das Patentdokument EP 3 304 003 B1, welches einen Magnetfeldsensor zum Durchführen einer unabhängigen Geschwindigkeits- und Richtungsmessung offenbart.

Hier sind im Sensor ein erstes, ein zweites und ein drittes voneinander beabstandetes Magnetfeldmesselement enthalten, welche jeweils ein Magnetfeldsignal ausgeben, proportional zur

Amplitude eines Magnetfelds, welches einem rotierenden Objekt zugeordnet ist. Es werden Paare von Differenzen aller drei Messwerte bestimmt und jeweils entsprechende Differenzsignale bestimmt, welche in der Form von Differentialkanälen ausgegeben werden. Ein Kombinationselement erzeugt ein kombiniertes Signal, basierend auf dem ersten, zweiten und dritten Magnetfeldsignal. Eine Steuerschaltung berechnet dann die Drehzahl und bestimmt die Drehrichtung, und erzeugt dann ein Sensorausgangssignal, welches eine Bewegungsgeschwindigkeit und eine Bewegungsrichtung des rotierenden Objekts anzeigt.

Dieser Sensor kann ortsunabhängig vom rotierenden Objekt vorgesehen werden.

Hier kommen insbesondere Hall-Sensoren zum Einsatz, welche das Magnetfeld, welches von einem rotierenden Objekt ausgeht, an drei Stellen misst, und hieraus durch die Steuerungseinheit eine Drehzahl und eine Bewegungsrichtung berechnet werden können.

Die Berechnung von drei Differenzkanälen ist jedoch aufwändig, verbraucht Rechenzeit und belegt Speicherplatz.

Ferner ist aus dem Stand der Technik das Dokument US 2012/249133 A1 bekannt. Dieses offenbart einen differentiellen Magnetfeldsensor, der einen von der Sensor-zu-Ziel-Ausrichtung unabhängigen Betrieb ermöglicht. Der differentielle Magnetfeldsensor ist mit mindestens zwei differentiellen Kanälen ausgestattet. Jeder Differenzkanal enthält ein Paar Magnetfeldsensorelemente und hat eine entsprechende Sensorachse, die durch diese Magnetfeldsensorelemente definiert ist. Die Erfassungsachsen sind nicht zueinander ausgerichtet.

Ferner ist aus dem Stand der Technik das Dokument US 2017/322233 A1 bekannt. Dieses offenbart einen Magnetsensor, der ein erstes Sensorelement und ein zweites Sensorelement umfasst. Das erste Sensorelement kann in der Lage sein, eine erste Komponente eines Magnetfeldes zu erfassen, die nicht parallel zu einer Achse verläuft, die durch einen Schnittpunkt einer ersten Ebene und einer zweiten Ebene gebildet wird. Die erste Ebene kann eine Ebene sein, in der sich ein Zahnrad dreht, und die zweite Ebene kann eine erste Oberfläche des ersten Sensorelements und eine zweite Oberfläche des zweiten Sensorelements umfassen. Die erste Komponente des Magnetfeldes kann in der zweiten Ebene liegen. Das zweite Sensorelement kann in der Lage sein, eine zweite Komponente des Magnetfeldes zu erfassen. Die zweite Komponente des Magnetfeldes kann in der zweiten Ebene liegen.

Es ist daher die Aufgabe der vorliegenden Erfindung, einen verbesserten Magnetfeldsensor zur Bestimmung einer Drehrichtung sowie einer Drehzahl eines rotierenden Objekts bereitzustellen, bei welchem die Rechenzeit verringert und die Genauigkeit erhöht werden kann.

Diese Aufgabe wird gelöst von einem System aus Magnetfeldsensor und Polrad gemäß Anspruch 1 sowie durch ein Verfahren gemäß Anspruch 9.

Weitere vorteilhafte Ausgestaltungen sind Gegenstand der abhängigen Ansprüche.

Ein erfindungsgemäßer System aus Magnetfeldsensor und Polradumfasst:
ein Polrad mit Zähnen und Lücken, wobei das Polrad magnetisch kodiert oder magnetisch vorgespannt ist;
einen Magnetfeldsensor, der aufweist: einen Chip mit mindestens einem ersten, einem zweiten und einem drittem Magnetfeldmesselement, welche jeweils dazu angepasst sind, ein erstes, zweites und drittes Magnetfeldsignal zu liefern, deren Amplituden proportional zu einem Magnetfeld sind, das von einem rotierenden Objekt ausgeht (oder von einem Dauermagneten ausgeht und durch die Bewegung des rotierenden Objekts abgelenkt wird). Die Normalenvektoren der mindestens drei Magnetfeldmesselemente sind linear unabhängig voneinander. Das bedeutet, dass diese beispielsweise jeweils einen Winkel von 90° miteinander einschließen können, wie beispielsweise ein kartesisches Koordinatensystem. Eine Signalerfassungseinheit ist dazu angepasst, ein erstes Differenzsignal und ein zweites Differenzsignal zu bestimmen, wobei das erste Differenzsignal auf einer Differenz zwischen dem Magnetfeldsignal des ersten Magnetfeldmesselements und zweiten Magnetfeldmesselements beruht, das zweite Differenzsignal auf einer Differenz zwischen den Magnetfeldsignalen des ersten Magnetfeldmesselements und des dritten Magnetfeldmesselements beruht. Die Signalerfassungseinheit ist ferner dazu angepasst, ein kombiniertes Signal zu berechnen und auszugeben, beruhend auf dem Magnetfeldsignal des ersten Magnetfeldmesselements sowie dem ersten Differenzsignal und dem zweiten Differenzsignal. Eine Auswerteeinheit ist dann dazu angepasst, ein Ausgangssignal zu erzeugen, welches basierend auf dem kombinierten Signaleine Bewegungsgeschwindigkeit und eine Bewegungsrichtung des Polrads beinhaltet.

Die mindestens drei Magnetfeldmesselemente sind Hall-Sensoren. Solche Sensoren sind im Vergleich zu anderen relativ kostengünstig, aber trotzdem sehr genau.

Hall-Sensoren bestehen aus dotierten Halbleiter-Schichten, die seitlich beispielsweise vier Elektroden aufweisen. Durch zwei gegenüberliegende Elektroden wird ein Strom eingespeist, an den beiden dann orthogonal dazu liegenden Elektroden liegt dann die sogenannte Hall-Spannung an. Wenn ein Hall-Sensor von einem senkrecht zur Schicht verlaufenden Magnetfeld durchströmt wird, gibt dieser eine Ausgangsspannung aus, welche proportional zum Betrag des Vektorproduktes aus magnetischer Flussdichte und Strom ist. Die Ursache für diese Hall-Spannung ist eine Lorentz-Kraft auf die sich bewegenden Ladungsträger in der dotierten Halbleiter-Schicht.

Das erste Magnetfeldelement ist ein lateraler Hall-Sensor, und das zweite und dritte Magnetfeldmesselement sind jeweils vertikale Hall-Sensoren. Der vertikale Hall-Sensoren ist so angeordnet, dass sie parallel zu den Magnetflusslinien positioniert ist, und sich parallel zu der Ebene des Chips erstreckt. Die vertikalen Hall-Sensoren stehen im Gegensatz dazu senkrecht zu den Magnetflusslinien, und steht auch senkrecht auf dem Chip.

Das erste Magnetfeldmesselement ist ein lateraler Hall-Sensor und flach auf dem Chip angebracht, und das zweite und dritte Magnetfeldmesselement sind jeweils vertikale Hall-Sensoren, die mit ihrer kleinen Fläche auf dem Chip stehen und sind somit senkrecht zum Chip angeordnet sind,

Dies hat wiederum den Vorteil, dass durch den lateralen Hall-Sensor eine magnetische Flussänderung von der Anordnung unabhängig ist - also immer ein Magnetfeld gemessen werden kann. Der Magnetfeldsensor könnte also auch vom rotierenden Objekt weg bewegt werden, und trotzdem hinreichend genau messen.

Der Magnetfeldsensor ist in diesem Fall ein 3D-Hall-Sensor, und es wird hier mit zwei Differenzsignalen gearbeitet, da die magnetische Flussänderung in einer Richtung von der Anordnung unabhängig ist - da unabhängig von Drehrichtung und Drehgeschwindigkeit immer eine Hall-Spannung erzeugt wird. Die Richtungserkennung erfolgt hier grundsätzlich über den Phasenversatz, d.h. die Differenz der Minima und Maxima der Amplituden der einzelnen Magnetfeldmesselemente. Für die Richtungserkennung reichen daher zwei Differenzsignale aus. Ein magnetisches Flusssignal kann hierbei auch weitere Diagnosemöglichkeiten liefern, beispielsweise die Bestimmung der Dicke des Luftspalts zwischen Magnetfeldsensor und dem rotierenden Objekt. Wenn dies in einem Nutzfahrzeug geschieht, könnte ein größer werdender Luftspalt beispielsweise den Hinweis liefern, dass sich die Position des Magnetfeldsensors relativ zum rotierenden Objekt über die Zeit verändert hat und der Fahrer daher die Werkstatt aufsuchen muss.

Weiter vorzugsweise kann eine vektorielle Auswertung durchgeführt werden.

Vorzugsweise schließen die normalen Vektoren der drei Magnetfeldmesselemente jeweils einen Winkel von ungefähr 90°, vorzugsweise genau 90°, miteinander ein. Durch eine solche Anordnung ist von sämtlichen Signalen die maximale Amplitude messbar.

Noch weiter vorzugsweise sind weitere Magnetfeldmesselemente vorhanden, welche beispielsweise im 45°-Winkel zwischen den drei Magnetfeldmesselementen, welche einen Winkel von 90° miteinander einschließen, angeordnet sind.

Der Chip ist in einer Ebene angeordnet, welche weitestgehend parallel, vorzugsweise parallel, zu einer Tangentialebene des rotierenden Objekts ist. Dadurch wird wiederum ermöglicht, dass eines der Messsignale unabhängig von der Ausrichtung ist, und dass auch bei sich vergrößerndem Spalt zwischen dem rotierenden Objekt und dem Chip eine genaue Messung möglich ist.

Weiter vorzugsweise sind der Chip und die mindestens drei Magnetfeldelemente in einem Gehäuse untergebracht, und der Chip ist vorzugsweise mit einem Halter befestigbar. Der Halter bewirkt, dass der Chip mit den Magnetfeldmesselementen fest in dem Gehäuse fixiert und somit ortsfest ist. Somit ist es ausreichend, den Magnetfeldsensor einmal zu kalibrieren, und er kann dann im Einsatz bleiben, ohne wiederholt nachkalibriert werden zu müssen.

Der Innenraum des Gehäuses ist weiter vorzugsweise zumindest teilweise mit einem Kunststoffmaterial ausgefüllt. Dies erhöht die Stabilität der Position des Magnetfeldsensors innerhalb des Gehäuses.

Weiter vorzugsweise sind Flussleitbleche am Gehäuse vorgesehen, um Störsignale im Bereich des Chips zu minimieren.

Weiter vorzugsweise weist der Magnetfeldsensor ferner eine Strom- oder Spannungsschnittstelle auf, mit welcher Signale ausgegeben werden können, beispielsweise an ein Steuerungssystem eines Nutzfahrzeugs.

Weiter vorzugsweise ist die Auswerteeinheit des Magnetfeldsensors dazu eingerichtet, eine Temperaturkompensation der Messsignale der mindestens drei Magnetfeldmesselemente vorzunehmen.

Somit wird ein hinreichend genaues Signal bei verschiedenen Temperaturen erhalten, und die Temperaturabhängigkeit von Drehgeschwindigkeit und Drehzahl bzw. der Messfehler können minimiert werden.

Ein erfindungsgemäßes System besteht aus einem Magnetfeldsensor sowie einem Polrad, wobei das Polrad magnetisch kodiert sein oder magnetisch vorgespannt sein kann.

Magnetisch kodiert kann dabei heißen, dass auf den Zähnen des Polrads kleine Dauermagnete angeordnet sind, welche jeweils magnetische Felder erzeugen.

Magnetisch vorgespannt heißt, dass das Polrad aus einem ferritischen Material besteht, und durch das Vorsehen eines Dauermagneten auf dem Chip des Magnetfeldsensors das Magnetfeld, welches vom Dauermagneten angeregt wird, abhängig von der Rotation des Polrads abgelenkt wird - die magnetischen Feldlinien verlaufen dann in einen oder mehrere Zähne des Polrads hinein, nicht allerdings in die Lücken, und werden dann durch die Rotation des Polrads abgelenkt.

Das Magnetfeld des Polrads erzeugt zusammen mit dem Magnetfeld, welches vom Magneten auf dem Chip ausgeht, ein Magnetsignal, welches dann entsprechend von dem Magnetfeldsensor gemessen werden kann.

Weiter vorzugsweise beinhaltet das System ein weiteres differentielles Element, beispielsweise einen optischen Sensor, welcher weiterhin dazu angepasst ist, die Drehrichtung des Polrads zu ermitteln. Dies ermöglicht eine noch genauere und sicherere Messung.

Auch kann ein weiteres differentielles Element dazu angepasst sein, Fremdfelder zu ermitteln und/oder zu kompensieren.

Ein erfindungsgemäßes Verfahren zur Bestimmung einer Drehzahl und einer Drehrichtung eines rotierenden Objekts mit Hilfe eines erfindungsgemäßen Systems umfasst die folgenden Schritte:
a) Erfassen jeweils eines Magnetfeldsignals von jeweils des ersten Magnetfeldmesselements, des zweiten Magnetfeldmesselements sowie des dritten Magnetfeldmesselements;
b) Ermitteln eines ersten Differenzsignals aus einer Differenz zwischen den Magnetfeldsignalen des ersten Magnetfeldmesselements und des zweiten Magnetfeldmesselements;
c) Ermitteln eines zweiten Differenzsignals aus einer Differenz zwischen den Magnetfeldsignalen des ersten Magnetfeldmesselements und des dritten Magnetfeldmesselements;
d) Berechnen eines kombinierten Signals aus dem Magnetfeldsignal des ersten Magnetfeldmesselements sowie dem ersten Differenzsignal sowie zweiten Differenzsignal;
e) Berechnen und Ausgeben eines Ausgangssignals, das eine Bewegungsgeschwindigkeit und eine Bewegungsrichtung des rotierenden Objekts beinhaltet.

Im Folgenden wird eine bevorzugte Ausführungsform der vorliegenden Erfindung anhand der beiliegenden Figuren beschrieben.

Fig. 1 zeigt eine Draufsicht und eine schematische Ansicht eines erfindungsgemäßen Magnetfeldsensors 1 und eines Polrads 20 in drei verschiedenen Orientierungen (Fig. 1 a) bis 1 c)).

In Fig. 2 sind typische Magnetfeldsignale der einzelnen Magnetfeldelemente in jeder der drei Orientierungen aus Fig. 1 gezeigt, wobei hier der Verlauf der Magnetfeldsignale über die Zeit aufgenommen ist, also dann, wenn das Polrad rotiert (Fig. 2 a) bis 2 c)).

In Fig. 3 ist eine Anordnung eines erfindungsgemäßen Magnetfeldsensors in einem Gehäuse gezeigt.

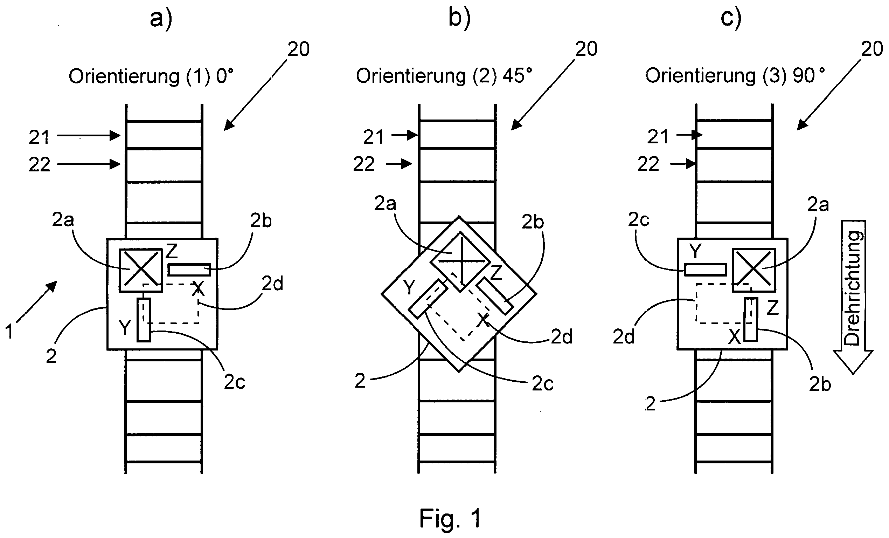

In Fig. 1 ist der erfindungsgemäße Magnetfeldsensor 1 sowie ein Polrad 20 gezeigt. Der Magnetfeldsensor 1 ist in der Draufsicht und oberhalb des Polrads 20 angeordnet. Das Polrad 20 weist Zähne 21 sowie Lücken 22 auf. Der Magnetfeldsensor beinhaltet einen Chip 2, auf welchem drei Magnetfeldmesselemente 2a, 2b und 2c angeordnet sind. Ferner ist der Magnet 2d auf diesem Chip angeordnet. Die Magnetfeldmesselemente 2a, 2b und 2c sind grundsätzlich quaderförmig ausgestaltet, mit einer größeren Grundfläche und jeweils kleinen, schmalen Seitenflächen. Das erste Magnetfeldmesselement 2a als laterales Hall-Element ist flach auf dem Chip 2 angebracht, und liegt mit seiner großen Grundfläche auf dem Chip 2 auf. Hier kann immer eine Hall-spannung gemessen werden, wenn das Polrad 20 rotiert. Die beiden anderen Magnetfeldmesselemente 2b und 2c sind vertikale Magnetfeldmesselemente und stehen mit der kleinen Fläche auf dem Chip auf und sind somit senkrecht zum Chip angeordnet. Der Chip 2 ist parallel zu einer Tangentialebene des Polrads 20. In Fig. 1 b) ist der Chip 2 aus Fig. 1a um 45° gedreht, die Position der Magnetfeldmesselemente 2a, 2b und 2c hat sich also auch geändert. Trotz allem liegt der Chip 2 noch in einer Ebene, welche parallel zu einer Tangentialebene des Polrads 20 ist. In Fig. 1 c) ist diese Darstellung nochmals um 45° gedreht, auch hier liegt der Chip 2 in einer Ebene, welche parallel zur Tangentialebene des Polrads 20 ist.

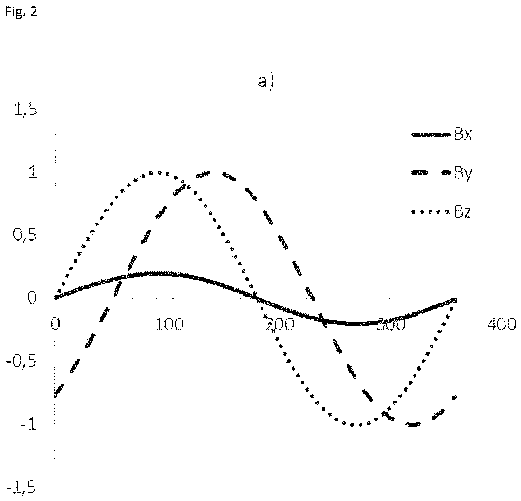

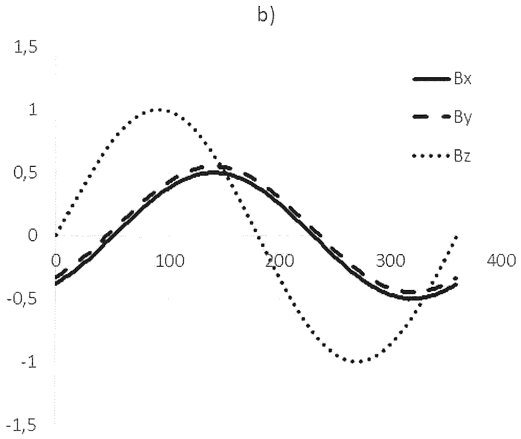

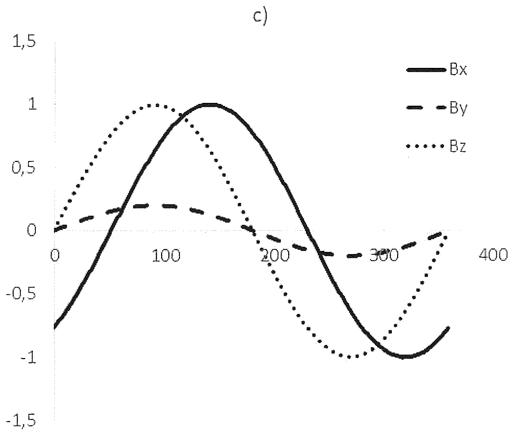

In Fig. 2 ist der Verlauf der Magnetfeldstärken, also somit das Signal der Sensoren 2a, 2b und 2c, über die Zeit (bzw. in diesem Fall: abhängig vom Drehwinkel) und abhängig von der Orientierung des Chips 2 dargestellt. Fig. 2a) entspricht der Darstellung in Fig. 1 a)

Das Signal des zweiten Magnetfeldmesselements 2b (in Fig. 2 als Bx gezeichnet) weist hier eine deutlich geringere Amplitude als die Signale des ersten Magnetfeldmesselements 2a (in Fig. 2 als Bz bezeichnet) und des dritten Magnetfeldmesselements 2c (in Fig. 2 als By bezeichnet) auf, da hier die Magnetlinien des Magneten 2d, welche durch das Polrad 20 abgelenkt werden, nur eine Hall-Spannung im zweiten Magnetfeldmesselement 2b hervorrufen können (da die Magnetfeldlinien nicht senkrecht zur Erstreckungsrichtung des zweiten Magnetfeldmesselements 2b stehen . Die Signale des ersten und dritten Magnetfeldmesselements 2a und 2c weisen eine größere Amplitude auf, da hier die Magnetfeldlinien senkrecht zum jeweiligen Hall-Element verlaufen und somit eine stärkere Hall-Spannungen hervorrufen können. Die beiden Amplituden der Magnetfeldmesselemente 2a und 2c sind phasenverschoben, was damit zu erklären ist, dass die Magnetfeldänderung an diesen beiden Elementen zeitlich versetzt eintritt, da diese in Drehrichtung des Polrads 20 voneinander beabstandet sind und somit die Zähne 21 des Polrads den Chip 2 zeitversetzt passieren - und somit die Ablenkung der Magnetfeldlinien des Dauermagneten 2d phasenversetzt erfolgt.

In Fig. 2 b) wird veranschaulicht, dass die Signale des Magnetfeldmesselements 2b und 2c eine ähnliche Form aufweisen, da hier jeweils Komponenten des vom Dauermagneten 2d wirkenden Magnetfelds, welches von der Rotation des Polrads 20 abgelenkt wird, wirken, welche entsprechend senkrecht zu den Hall-Elementen stehen und so eine Hall-Spannung hervorrufen können.

In Fig. 2 c) sind die Messsignale der Sensoren in der Anordnung aus Fig. 1 c) gezeigt. Hier sind starke Ausschläge der Signale des ersten und des zweiten Magnetfeldmesselements 2a und 2b gezeigt, jeweils phasenverschoben. Dies ist mit dem räumlichen Abstand des ersten und zweiten Magnetfeldmesselements 2a und 2b in Drehrichtung zu erklären. Vom dritten Magnetfeldmesselement 2c sind allerdings geringe Ausschläge zu sehen, da hier nur ein sehr geringer Anteil der Magnetfeldlinien senkrecht zum Hall-Sensor eintritt und somit in der Erstreckungsrichtung des dritten Magnetfeldmesselements 2c keine starke Hall-Spannung erzeugt werden kann.

Anhand dieser Signale können sowohl eine Drehgeschwindigkeit als auch eine Drehrichtung ermittelt werden. Insbesondere der Phasenversatz erlaubt die Erkennung der Drehrichtung. Zwei Kanäle reichen für eine Richtungserkennung aus, es werden hier keine drei Kanäle benötigt. Dies spart Rechenzeit ein, und somit können schneller die Ergebnisse der Berechnungen für Drehrichtung und Drehzahl bereitgestellt werden.

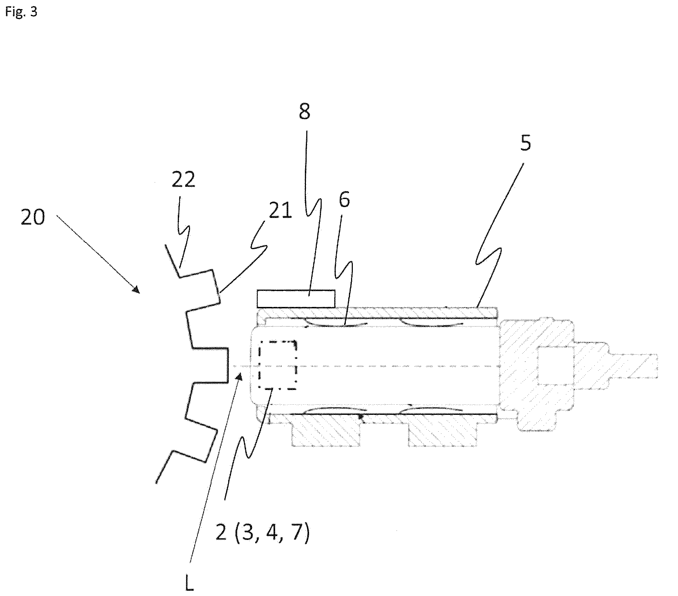

In Fig. 3 ist eine Anordnung des Chips 2 in einem Gehäuse 5 gezeigt. Der Chip 2 ist mit einem Halter 6 am Gehäuse 5 befestigt. Der Innenraum des Gehäuses 5 ist teilweise mit einem Kunststoffmaterial ausgefüllt. Dadurch wird der Chip im Gehäuse besser fixiert. Auch ist die Position des Gehäuses relativ zu einem Polrad gezeigt. Der Luftspalt L zwischen Polrad 20, welches Zähne 21 und Lücken 22 aufweist, und dem Gehäuse 5 kann entsprechend variieren. Ferner ist angedeutet, dass sich die Signalerfassungseinheit 3, Auswerteeinheit 4 sowie die Strom- oder Spannungsschnittstelle 7 auf dem Chip befinden.

Im Bereich des Chips 2 ist ferner ein Flussleitblech 8 gezeigt, welches magnetische Störfelder vom Chip 2 fernhalten soll.

Die vorliegende Erfindung ist nicht auf die beschriebene Ausführungsform beschränkt. Es ist wichtig, dass mindestens drei Hall-Elemente vorhanden sind, deren Normalenvektoren linear unabhängig zueinander sind. Dazwischen können jedoch noch weitere Elemente angeordnet werden, beispielsweise weitere Hall-Elemente im 45°-Winkel zu den entsprechenden Messelementen 2a, 2b und 2c. Dies würde die Genauigkeit noch weiter erhöhen.

Die vorliegende Erfindung betrifft einen Magnetfeldsensor 1, welcher dazu angepasst ist, die Bewegung eines rotierenden Objekts 20, das entweder selbst ein rotierendes Magnetfeld erzeugt oder ein bestehendes Magnetfeld entsprechend ablenkt, zu bestimmen, insbesondere die Drehrichtung und Drehzahl des rotierenden Objekts. Hierzu kommt ein Chip 2 mit mindestens drei Magnetfeldmesselementen 2a, 2b, 2c zum Einsatz, vorzugsweise ein 3D-Hall-Sensor. Solche Magnetfeldsensoren 1 kommen insbesondere bei Nutzfahrzeugen zum Einsatz.

### Bezugszeichenliste

- 1: Magnetfeldsensor
- 2: Chip
- 2a: erstes Magnetfeldmesselement
- 2b: zweites Magnetfeldmesselement
- 2c: drittes Magnetfeldmesselement
- 2d: Dauermagnet
- 3: Signalerfassungseinheit
- 4: Auswerteeinheit
- 5: Gehäuse
- 6: Halter
- 7: Strom- oder Spannungsschnittstelle
- 8: Flussleitblech
- 20: Polrad
- 21: Zahn
- 22: Lücke
- D1: erstes Differenzsignal
- D2: zweites Differenzsignal
- KS: kombiniertes Signal
- AS: Ausgangssignal

## Patentansprüche

1. System aus einem Magnetfeldsensor (1) und einem Polrad (20) mit Zähnen (21) und Lücken (22), wobei das Polrad (20) magnetisch kodiert oder magnetisch vorgespannt ist, wobei der Magnetfeldsensor (1), umfasst:
einen Chip (2) mit mindestens einem ersten, einem zweiten und einem dritten Magnetfeldmesselement (2a, 2b, 2c), welche jeweils dazu angepasst sind, ein erstes, zweites und drittes Magnetfeldsignal (S1, S2, S3) auszugeben, deren Amplituden proportional zu einem Magnetfeld sind, das vom Polrad (20) ausgeht,
wobei die Richtungen der Normalenvektoren der mindestens drei Magnetfeldmesselemente (2a, 2b, 2c) linear unabhängig voneinander sind,
eine Signalerfassungseinheit (3), welche dazu angepasst ist, ein erstes Differenzsignal (D1) und ein zweites Differenzsignal (D2) zu bestimmen,
wobei das erste Differenzsignal (D1) auf einer Differenz zwischen den Magnetfeldsignalen des ersten Magnetfeldmesselements (2a) und des zweiten Magnetfeldmesselements (2b) beruht, und
das zweite Differenzsignal (D2) auf einer Differenz zwischen den Magnetfeldsignalen des ersten Magnetfeldmesselements (2a) und des dritten Magnetfeldmesselements (2c) beruht,
und die Signalerfassungseinheit (3) ferner dazu angepasst ist, ein kombiniertes Signal (KS) aus dem Magnetfeldsignal des ersten Magnetfeldmesselements (2a) sowie dem ersten Differenzsignal (D1) sowie zweiten Differenzsignals (D2) zu bestimmen,
eine Auswerteeinheit (4), welche dazu angepasst ist, ein Ausgangssignal (AS) zu erzeugen, das basierend auf dem kombinierten Signal (KS) eine Bewegungsgeschwindigkeit und eine Bewegungsrichtung des Polrads (20) beinhaltet,
wobei das erste Magnetfeldmesselement (2a) ein lateraler Hall-Sensor ist und flach auf dem Chip (2) angebracht ist, und das zweite und dritte Magnetfeldmesselement (2b, 2c) jeweils vertikale Hall-Sensoren sind, die mit ihrer kleinen Fläche auf dem Chip (2) stehen und sind somit senkrecht zum Chip (2) angeordnet sind,
wobei der Chip (2) in einer Ebene angeordnet ist, welche weitestgehend parallel zu einer Tangentialebene des Polrads (20) ist.

2. System gemäß Anspruch 1, wobei die Normalenvektoren der drei Magnetfeldmesselemente (2a, 2b, 2c) jeweils einen Winkel von 90° miteinander einschließen, und optional weitere Magnetfeldmesselemente vorgesehen sind.

3. System gemäß einem der vorhergehenden Ansprüche, wobei der Chip (2) mit den mindestens drei Magnetfeldmesselementen (2a, 2b, 2c) in einem Gehäuse (5) untergebracht ist, und der Chip (2) vorzugsweise mit einem Halter (6) befestigbar ist,
wobei der Innenraum des Gehäuses (5) weiter vorzugsweise zumindest teilweise mit einem Kunststoffmaterial ausgefüllt ist,
und vorzugsweise Flussleitbleche (8) vorgesehen sind, um Störsignale im Bereich des Chips (2) zu minimieren.

4. System gemäß einem der vorhergehenden Ansprüche, wobei der Magnetfeldsensor (1) eine Strom- oder Spannungsschnittstelle (7) aufweisend.

5. System gemäß einem der vorhergehenden Ansprüche, wobei die Auswerteeinheit (4) dazu angepasst ist, eine Temperaturkompensation der Messsignale der mindestens drei Magnetfeldmesselemente (2a, 2b, 2c) vorzunehmen.

6. System gemäß einem der vorhergehenden Ansprüche, wobei der Chip (2) des Magnetfeldsensors (1) magnetisch vorgespannt ist, vorzugsweise durch Vorsehen eines Dauermagneten (2d) auf dem Chip (2).

7. System gemäß einem der vorhergehenden Ansprüche, wobei ferner ein weiteres differentielles Element (8) vorgesehen ist, welches dazu angepasst ist, die Drehrichtung des Polrads (20) zu ermitteln.

8. System gemäß einem der vorhergehenden Ansprüche, wobei ferner ein weiteres differentielles Element (8) vorgesehen ist, welches dazu angepasst ist, Fremdfelder zu ermitteln und/oder zu kompensieren.

9. Verfahren zur Bestimmung einer Drehzahl und einer Drehrichtung eines Polrads (20) mit Hilfe eines Systems gemäß einem der Ansprüche 1 bis 8, umfassend die folgenden Schritte:
a) Erfassen jeweils eines Magnetfeldsignals (S1, S2, S3) von jeweils des ersten Magnetfeldmesselements (2a), des zweiten Magnetfeldmesselements (2b) sowie des dritten Magnetfeldmesselements (2c);
b) Ermitteln eines ersten Differenzsignals (D1) aus einer Differenz zwischen den Magnetfeldsignalen (S1, S2) des ersten Magnetfeldmesselements (2a) und des zweiten Magnetfeldmesselements (2b);
c) Ermitteln eines zweiten Differenzsignals (D1) aus einer Differenz zwischen den Magnetfeldsignalen (S1, S3) des ersten Magnetfeldmesselements (2a) und des dritten Magnetfeldmesselements (2c);
d) Berechnen eines kombinierten Signal (KS) aus dem Magnetfeldsignal (S1) des ersten Magnetfeldmesselements (2a) sowie dem ersten Differenzsignal (D1) sowie zweiten Differenzsignal (D2);
e) Berechnen und Ausgeben eines Ausgangssignals (AS), das eine Bewegungsgeschwindigkeit und eine Bewegungsrichtung des Polrads (20) beinhaltet.

## Claims

1. System comprising a magnetic field sensor (1) and a pole wheel (20) with teeth (21) and gaps (22), wherein the pole wheel (20) is magnetically coded or magnetically pre-stressed, wherein the magnetic field sensor (1) comprises:
a chip (2) having at least a first, a second and a third magnetic field measuring element (2a, 2b, 2c), which are each configured to output a first, second and third magnetic field signal (S1, S2, S3), the amplitudes of which are proportional to a magnetic field emanating from the pole wheel (20),
wherein the directions of the normal vectors of the at least three magnetic field measuring elements (2a, 2b, 2c) are linearly independent of one another,
a signal acquisition unit (3), which is configured to determine a first differential signal (D1) and a second differential signal (D2),
wherein the first differential signal (D1) is based on a difference between the magnetic field signals of the first magnetic field measuring element (2a) and the second magnetic field measuring element (2b), and the second differential signal (D2) is based on a difference between the magnetic field signals of the first magnetic field measuring element (2a) and the third magnetic field measuring element (2c),
and the signal acquisition unit (3) is further configured to determine a combined signal (KS) from the magnetic field signal of the first magnetic field measuring element (2a) as well as the first differential signal (D1) and the second differential signal (D2),
an evaluation unit (4), which is configured to generate an output signal (AS), which, based on the combined signal (KS), contains a speed of motion and a direction of motion of the pole wheel (20),
wherein the first magnetic field measuring element (2a) is a lateral Hall sensor and is mounted flat on the chip (2), and the second and third magnetic field measuring elements (2b, 2c) are each vertical Hall sensors, which stand on the chip (2) with their small surface and are thus arranged perpendicular to the chip (2),
wherein the chip (2) is arranged in a plane which is substantially parallel to a tangential plane of the pole wheel (20).

2. System according to claim 1, wherein the normal vectors of the three magnetic field measuring elements (2a, 2b, 2c) each include an angle of 90° to one another, and optionally further magnetic field measuring elements are provided.

3. System according to any one of the preceding claims, wherein the chip (2) with the at least three magnetic field measuring elements (2a, 2b, 2c) is housed in a housing (5), and the chip (2) is preferably fastenable with a holder (6),
wherein the interior of the housing (5) is further preferably at least partially filled with a plastics material,
and preferably flux guide plates (8) are provided to minimize interference signals in the region of the chip (2).

4. System according to any one of the preceding claims, wherein the magnetic field sensor (1) has a current or voltage interface (7).

5. System according to any one of the preceding claims, wherein the evaluation unit (4) is configured to perform a temperature compensation of the measurement signals of the at least three magnetic field measuring elements (2a, 2b, 2c).

6. System according to any one of the preceding claims, wherein the chip (2) of the magnetic field sensor (1) is magnetically pre-stressed, preferably by providing a permanent magnet (2d) on the chip (2).

7. System according to any one of the preceding claims, wherein a further differential element (8) is also provided, which is configured to determine the rotational direction of the pole wheel (20).

8. System according to any one of the preceding claims, wherein a further differential element (8) is also provided, which is configured to determine and/or compensate for extraneous fields.

9. Method for determining a rotational speed and a rotational direction of a pole wheel (20) using a system according to any one of claims 1 to 8, comprising the following steps:
a) detecting one magnetic field signal (S1, S2, S3) each from the first magnetic field measuring element (2a), the second magnetic field measuring element (2b), and the third magnetic field measuring element (2c);
b) determining a first differential signal (D1) from a difference between the magnetic field signals (S1, S2) of the first magnetic field measuring element (2a) and the second magnetic field measuring element (2b);
c) determining a second differential signal (D2) from a difference between the magnetic field signals (S1, S3) of the first magnetic field measuring element (2a) and the third magnetic field measuring element (2c);
d) calculating a combined signal (KS) from the magnetic field signal (S1) of the first magnetic field measuring element (2a) as well as the first differential signal (D1) and the second differential signal (D2);
e) calculating and outputting an output signal (AS), which contains a speed of motion and a direction of motion of the pole wheel (20).

## Revendications

1. Système constitué d'un capteur de champ magnétique (1) et d'une roue polaire (20) avec des dents (21) et des espaces (22), dans lequel la roue polaire (20) est codée magnétiquement ou précontrainte magnétiquement, dans lequel le capteur de champ magnétique (1) comprend :
une puce (2) avec au moins un premier, un deuxième et un troisième élément de mesure de champ magnétique (2a, 2b, 2c) qui sont respectivement adaptés pour émettre un premier, un deuxième et un troisième signal de champ magnétique (S1, S2, S3) dont les amplitudes sont proportionnelles à un champ magnétique qui est émis par la roue polaire (20),
dans lequel les directions des vecteurs normaux des au moins trois éléments de mesure de champ magnétique (2a, 2b, 2c) sont linéairement indépendantes les unes des autres,
une unité de détection de signal (3) qui est adaptée pour déterminer un premier signal de différence (D1) et un deuxième signal de différence (D2),
dans lequel le premier signal de différence (D1) repose sur une différence entre les signaux de champ magnétique du premier élément de mesure de champ magnétique (2a) et du deuxième élément de mesure de champ magnétique (2b), et le deuxième signal de différence (D2) repose sur une différence entre les signaux de champ magnétique du premier élément de mesure de champ magnétique (2a) et du troisième élément de mesure de champ magnétique (2c),
et l'unité de détection de signal (3) est en outre adaptée pour déterminer un signal combiné (KS) à partir du signal de champ magnétique du premier élément de mesure de champ magnétique (2a) ainsi que du premier signal de différence (D1) et du deuxième signal de différence (D2),
une unité d'évaluation (4) qui est adaptée pour générer un signal de sortie (AS) qui, sur la base du signal combiné (KS), contient une vitesse de déplacement et une direction de déplacement de la roue polaire (20),
dans lequel le premier élément de mesure de champ magnétique (2a) est un capteur à effet Hall latéral et est agencé à plat sur la puce (2), et les deuxième et troisième éléments de mesure de champ magnétique (2b, 2c) sont respectivement des capteurs à effet Hall verticaux qui reposent avec leur petite surface sur la puce (2) et sont ainsi disposés perpendiculairement à la puce (2),
dans lequel la puce (2) est disposée dans un plan qui est dans une large mesure parallèle à un plan tangentiel de la roue polaire (20).

2. Système selon la revendication 1, dans lequel les vecteurs normaux des trois éléments de mesure de champ magnétique (2a, 2b, 2c) forment respectivement entre eux un angle de 90°, et des éléments de mesure de champ magnétique supplémentaires sont facultativement prévus.

3. Système selon l'une quelconque des revendications précédentes, dans lequel la puce (2) avec les au moins trois éléments de mesure de champ magnétique (2a, 2b, 2c) est logée dans un boîtier (5) et la puce (2) peut de préférence être fixée avec un support (6),
dans lequel l'espace intérieur du boîtier (5) est de préférence en outre rempli au moins partiellement d'un matériau plastique,
et de préférence des déflecteurs (8) sont prévus pour minimiser des signaux parasites au niveau de la puce (2).

4. Système selon l'une quelconque des revendications précédentes, dans lequel le capteur de champ magnétique (1) présente une interface de courant ou de tension (7).

5. Système selon l'une quelconque des revendications précédentes, dans lequel l'unité d'évaluation (4) est adaptée pour effectuer une compensation de température des signaux de mesure des au moins trois éléments de mesure de champ magnétique (2a, 2b, 2c).

6. Système selon l'une quelconque des revendications précédentes, dans lequel la puce (2) du capteur de champ magnétique (1) est précontrainte magnétiquement, de préférence en prévoyant un aimant permanent (2d) sur la puce (2).

7. Système selon l'une quelconque des revendications précédentes, dans lequel un élément différentiel (8) supplémentaire est en outre prévu, qui est adapté pour déterminer le sens de rotation de la roue polaire (20).

8. Système selon l'une quelconque des revendications précédentes, dans lequel un élément différentiel (8) supplémentaire est en outre prévu, qui est adapté pour déterminer et/ou compenser des perturbations.

9. Procédé de détermination d'une vitesse de rotation et d'un sens de rotation d'une roue polaire (20) à l'aide d'un système selon l'une quelconque des revendications 1 à 8, comprenant les étapes suivantes :
a) détection respectivement d'un signal de champ magnétique (S1, S2, S3) provenant respectivement du premier élément de mesure de champ magnétique (2a), du deuxième élément de mesure de champ magnétique (2b) et du troisième élément de mesure de champ magnétique (2c) ;
b) détermination d'un premier signal de différence (D1) à partir d'une différence entre les signaux de champ magnétique (S1, S2) du premier élément de mesure de champ magnétique (2a) et du deuxième élément de mesure de champ magnétique (2b) ;
c) détermination d'un deuxième signal de différence (D2) à partir d'une différence entre les signaux de champ magnétique (S1, S3) du premier élément de mesure de champ magnétique (2a) et du troisième élément de mesure de champ magnétique (2c) ;
d) calcul d'un signal combiné (KS) à partir du signal de champ magnétique (S1) du premier élément de mesure de champ magnétique (2a) ainsi que du premier signal de différence (D1) et du deuxième signal de différence (D2) ;
e) calcul et émission d'un signal de sortie (AS) qui contient une vitesse de déplacement et une direction de déplacement de la roue polaire (20).
